# EUROPÄISCHE PATENTSCHRIFT

(11) **EP 2 626 237 B1**
(45) Veröffentlichungstag und Bekanntmachung des Hinweises auf die Patenterteilung: **03.04.2019**
(21) Anmeldenummer: 12154891.1
(22) Anmeldetag: 10.02.2012
(51) Int. Cl.: B60N 2/30, B60N 2/32, B60R 21/02

(54) **Kraftfahrzeug mit einer Sitzbank**
Motor vehicle with a seating bench
Véhicule automobile doté d'un banc

(43) Veröffentlichungstag der Anmeldung: 14.08.2013
(73) Patentinhaber: Magna Steyr Fahrzeugtechnik AG & Co KG, 8041 Graz (AT)
(72) Erfinder: Aschaber, Christoph, 8020 Graz (AT); Auer, Thomas, 9363 Metnitz (AT); Erlacher, Manuel, 9545 Radenthein (AT); Rodler, Martin, 8160 Krottendorf (AT); Zachnegger, Harald, 8041 Graz (AT)
(74) Vertreter: Zangger, Bernd

(56) Entgegenhaltungen:
- WO-A1-99/62739
- DE-A1- 19 628 699
- DE-A1- 19 811 886
- DE-A1-102010 005 368
- FR-A- 1 024 572
- FR-A1- 2 923 188
- FR-A3- 2 918 935
- US-A- 3 703 310
- US-A1- 2011 156 424

## Beschreibung

Die vorliegende Erfindung betrifft ein Kraftfahrzeug mit einer Sitzbank, die eine in einer Normalstellung annähernd horizontale Sitzfläche und eine in der Normalstellung annähernd vertikale Lehne umfasst.

Derartige Sitzbänke für Kraftfahrzeuge sind allgemein bekannt. Insbesondere durch die Lehne einer derartigen Sitzbank wird die Sicht eines Insassen, der sich in Fahrtrichtung vor der Sitzbank befindet, beispielsweise des Fahrers des Kraftfahrzeuges, auf Bereiche hinter der Sitzbank, insbesondere in einen Laderaum oder Kofferraum behindert oder verunmöglicht.

Verschiedene Vorrichtungen zur Abtrennung eines Bereiches vor einer Sitzbank von einem Bereich hinter einer Sitzbank sind aus DE 10 2010 005368 A1, US 2011/156424 A1, DE 196 28 699 A1, FR 2 923 188 A1, DE 198 11 886 A1, FR 1 024 572 A, das als nächstliegenden Stand der Technik betrachtet wird und US 3 703 310 A bekannt. Diese zeigen teilweise keine Maßnahmen um die Sicht auf Bereiche hinter der Sitzbank zu verbessern und verwenden andererseits Netzstrukturen um doch eine beschränkte Sicht von vorne nach hinten zu ermöglichen.

Die DE 10 2010 005368 A1 offenbart beispielsweise einen Fahrzeugsitz mit einem flexiblen, elastischen Flächengebilde, das in eine schräggestellte Sitzposition bewegbar ist, in der das Flächengebilde durch das Gewicht des aufsitzenden Fahrzeuginsassen unter Ausbildung einer Sitzfläche und einer Rückenlehnenfläche elastisch verformbar ist, wobei das Flächengebilde in einem starren Rahmen aufgespannt ist, der um eine in Querrichtung des Fahrzeugsitzes verlaufende erste Schwenkachse an einem Sitzunterbau von einer horizontalen Nichtgebrauchsposition in die Sitzposition verschwenkbar ist.

Es ist eine Aufgabe der Erfindung ein Kraftfahrzeug mit einer Sitzbank anzugeben, das auf einfache und kostengünstige Weise sowohl ein bequemes Sitzen auf der Sitzbank als auch eine gute Sicht von einem vorderen in einen hinteren Bereich im Kraftfahrzeug ermöglicht.

Die Lösung der Aufgabe erfolgt durch ein Kraftfahrzeug mit einer Sitzbank, die eine in einer Normalstellung annähernd horizontale Sitzfläche und eine in der Normalstellung annähernd vertikale Lehne umfasst, wobei die Lehne zumindest einen transparenten Bereich umfasst, der so ausgebildet ist, dass die Sicht aus einem Bereich in Fahrtrichtung vor der Lehne in einen Bereich in Fahrtrichtung hinter der Lehne ermöglicht ist, mit den weiteren Merkmalen gemäß Anspruch 1.

Erfindungsgemäß umfasst die Lehne eine Lehnenrückwand und die Lehnenrückwand ist in dem zumindest einen transparenten Bereich aus transparentem Material, insbesondere aus Glas oder Kunststoff ausgebildet. Auf diese Weise bietet die Lehne die Steifigkeit einer Lehnenrückwand, erlaubt aber dennoch den Blick in den Bereich hinter die Lehne.

Erfindungsgemäß umfasst die Lehne eine Polsterung, wobei in dem zumindest einen transparenten Bereich die Polsterung entfernbar ist und/oder von einem transparenten Polster gebildet ist.

In dem zumindest einen transparenten Bereich ist die Polsterung gemäß einer Ausführungsform entfernbar, insbesondere wegklappbar, beispielsweise in Fahrtrichtung nach vorn wegklappbar oder auch nach vorn herausziehbar. Hierdurch entsteht auch bei intransparenter Ausführung der Polsterung ein transparenter Bereich in der Lehne, sobald die Polsterung entfernt bzw. weggeklappt ist.

In einer anderen Ausführungsform ist in dem zumindest einen transparenten Bereich die Polsterung von einem transparenten, insbesondere luftgefüllten Polster gebildet. Hierdurch ist der Blick durch die Trennwand ohne Entfernen der Polsterung bzw. eines Teiles der Polsterung möglich.

Der Bereich in Fahrrichtung vor der Lehne ist üblicherweise der vordere Innenraum des Kraftfahrzeuges in dem sich der Fahrer und eventuell Personen auf vorderen Sitzplätzen im Fahrzeug befinden. Der Bereich hinter der Lehne ist üblicherweise ein Kofferraum oder auch ein zum Beispiel offener Laderaum. Die Sicht aus dem vorderen Raum in den hinteren Raum erfolgt durch den transparenten Bereich der Lehne. Der transparente Bereich in der Lehne ist dazu zumindest so groß ausgeführt, dass ein nicht unbeträchtlicher Teil des in Fahrtrichtung hinteren Bereiches einsehbar ist.

Dadurch ist die Sicht in den hinteren Fahrzeugbereich, also beispielsweise in den Laderaum, auch dann möglich, wenn die Lehne aufgrund ihrer Dimensionen oder Anordnung die Sicht in den hinteren Bereich besonders beeinträchtigt. Durch die transparente Ausbildung eines Bereiches der Lehne dient dieser Bereich zwar als Abgrenzung gegenüber dem hinteren Bereich, beispielsweise einem Kofferraum oder auch einer offenen Ladefläche, um so zum Beispiel als Schutz gegen Lärm und Schmutz aus dem hinteren Bereich zu wirken, erlaubt aber zusätzlich die Sicht in den hinteren Bereich des Kraftfahrzeuges der ohne den transparenten Bereich der Lehne nur schwer oder gar nicht einsehbar ist.

Weiterbildungen der Erfindung sind in den abhängigen Ansprüchen, der Beschreibung sowie den beigefügten Zeichnungen angegeben.

Gemäß einer Ausgestaltung der Erfindung umfasst die Lehnenrückwand in dem zumindest einen transparenten Bereich einen transparenten Wabenkern. Durch die Verwendung einer Sandwichstruktur mit einem Wabenkern ist es möglich eine transparente und dennoch hoch belastbare Lehnenrückwand auszubilden.

In einer Ausgestaltung der Erfindung ist die Lehne so ausgebildet, dass die Lehne, zumindest in einer Trennwandstellung, eine Trennwand bildet, die den Bereich in Fahrtrichtung hinter der Lehne vom Bereich in Fahrtrichtung vor der Lehne abtrennt. Die Lehne kann also so gestaltet sein, dass sie eine höhere Trennwirkung zwischen dem Bereich vor der Lehne und dem Bereich hinter der Lehne aufweist als übliche Lehnen, insbesondere in dem die Lehne so groß dimensioniert ist oder so weit verformbar, z.B. ausziehbar ist, dass durch die Lehne der größte Teil des Innenraumes des Kraftfahrzeuges überdeckt wird. Durch eine derart gestaltete Lehne würde die Sicht in die hinteren Bereiche des Fahrzeuges besonders erschwert, durch den erfindungsgemäßen transparenten Bereich in der Lehne jedoch ermöglicht.

Gemäß einer weiteren Ausführungsform sind die Sitzfläche und die Lehne in eine Trennwandstellung verstellbar, in der die Sitzfläche und die Lehne eine zumindest annähernd vertikale Position einnehmen und die Lehne oberhalb der Sitzfläche angeordnet ist, so dass die Lehne zusammen mit der Sitzfläche eine Trennwand bildet, die den Bereich in Fahrtrichtung hinter der Trennwand vom Bereich in Fahrtrichtung vor der Trennwand abtrennt.

In dieser Ausführungsform sind die Lehne und die Sitzfläche also derart verstellbar, beispielsweise schwenkbar, dass beide in eine annähernd vertikale Position gebracht werden können. In der vertikalen Position sind die Rückseite der Lehne und die Unterseite der Sitzfläche in Fahrtrichtung nach hinten ausgerichtet. Lehne und Sitzfläche bilden zusammen eine Trennwand, wobei durch den transparenten Bereich in der Lehne die Sicht hinter die Trennwand ermöglicht wird.

Bevorzugt ist die Lehnenoberkante mit dem Dach des Kraftfahrzeuges in Kontakt.

Die Lehne oder die Lehne und die Sitzfläche sind geometrisch so ausgebildet, dass die Oberkante der Lehne in der Trennwandstellung das Dach des Fahrzeuges an dessen Innenseite erreicht, also üblicherweise mit einem Dachhimmel in Verbindung steht. Der Kontakt zum Dachhimmel kann auch über flache Zwischenelemente, wie zum Beispiel Dichtlippen erfolgen. Die Trennwand aus Lehne und Sitzfläche trennt aber im Wesentlichen die gesamte Höhe des Innenraumes des Kraftfahrzeuges, vom Boden bis zum Dach.

Vorzugsweise ist die Lehne über eine erste Schwenkachse im hinteren Bereich der Sitzfläche an der Sitzfläche schwenkbar gelagert und die Sitzfläche über eine zweite Schwenkachse im vorderen Bereich der Sitzfläche am Fahrzeugrahmen schwenkbar gelagert und die Sitzfläche und die Lehne sind um die erste und zweite Schwenkachse in die Trennwandstellung schwenkbar. Eine derartige Anordnung von Schwenkachsen stellt einen kostengünstigen Verstellmechanismus für die Verstellung der Lehne und der Sitzfläche in die genannten vertikalen Positionen der Trennwandstellung dar. Zudem kann die erste Schwenkachse in der Normalstellung auch dazu genutzt werden, die Neigung der Lehne so einzustellen, dass ein komfortables, den individuellen Bedürfnissen eines Fahrzeuginsassen gerechtes Sitzen auf der Sitzbank ermöglicht wird.

Vorzugsweise erstreckt sich die Lehnenoberkante über die gesamte Breite des Daches des Kraftfahrzeuges und die Lehnenoberkante ist in der Trennwandstellung über die gesamte Breite mit dem Dach des Kraftfahrzeuges in Kontakt. Die Lehnenoberkante deckt daher im Bereich des Dachhimmels im Wesentlichen die gesamte Breite des Kraftfahrzeuges ab wodurch eine bessere Abtrennung gewährleistet ist.

Vorzugsweise sind die Sitzfläche und die Lehne so ausgebildet, dass in der Trennwandstellung die Trennwand den gesamten Querschnitt des Kraftfahrzeuges überdeckt. Die Trennwand, die aus der Lehne und der Sitzfläche gebildet wird, reicht also sowohl in der Höhe vom Boden bis zur Decke des Fahrzeuges, als auch in der Breite von einer Seite des Fahrzeuges bis zur gegenüberliegenden Seite, beispielsweise von einer B-Säule zur gegenüberliegenden B-Säule. Die Sitzfläche und die Lehne sind so geformt, dass die Kontur der Trennwand im Wesentlichen mit der Kontur des Fahrzeug-Innenraumes übereinstimmt und dadurch den gesamten Querschnitt abdeckt. Hierdurch wird eine optimale Trennwirkung der Trennwand sichergestellt.

In einer bevorzugten Ausführungsform ist im Innenraum des Kraftfahrzeuges zumindest ein Dichtelement angeordnet, das in der Trennwandstellung einen Kontaktbereich zwischen der Trennwand und dem Kraftfahrzeug abdichtet. Besonders bevorzugt sind über größere Abschnitte oder die gesamte Kontur der Verbindungslinien zwischen Trennwand und Kraftfahrzeug ein oder mehrere Dichtelemente angeordnet. Als Dichtelemente können insbesondere Dichtlippen verwendet werden.

Bevorzugt trennt in der Trennwandstellung die Trennwand den Bereich in Fahrtrichtung hinter der Trennwand vom Bereich in Fahrtrichtung vor der Trennwand annähernd schalldicht, wasserdicht und/oder luftdicht ab. Lehne, Sitzfläche und etwaige Dichtelemente sind also vorteilhaft so ausgebildet, dass ein bestmöglicher Schutz des vorderen Innenraumes vom Bereich hinter der Trennwand gegeben ist, insbesondere in Bezug auf Lärm, Wind oder Wassereintritt aus dem hinteren Bereich.

Vorteilhaft ist im Innenraum des Kraftfahrzeuges zumindest ein Fixierelement angeordnet, das dazu eingerichtet ist, in der Trennwandstellung die Lehne und/oder die Sitzfläche in der zumindest annähernd vertikalen Position am Kraftfahrzeug zu fixieren. Hierdurch kann ein sicherer Halt der Trennwand in der aufrechten Position auch während der Fahr sichergestellt werden.

Gemäß einer Ausführungsform der Erfindung umfasst das Dach des Kraftfahrzeuges ein abnehmbares oder verschiebbares oder faltbares Dachelement, das in der Trennwandstellung der Sitzbank in Fahrtrichtung hinter der Trennwand liegt. Ein hinterer Teil des Daches ist also abnehmbar oder als Ganzes oder in Segmenten nach vorne oder nach hinten verschiebbar bzw. faltbar, beispielsweise wie bei einem bekannten "sliding folding roof. Hierdurch entsteht durch Aufrichten von Sitzfläche und Lehne zur Trennwandstellung und Abnehmen bzw. Verschieben oder Falten des hinteren Dachelementes ein Fahrzeug mit hinten offener Ladefläche, entsprechend einem bekannten "Pickup".

Gemäß einer weiteren Ausführungsform ist ein flaches Ladebodenelement, das sich in der Normalstellung der Sitzbank im Wesentlichen unter der Sitzfläche befindet, in der Trennwandstellung der Sitzbank angehoben, so dass das Ladebodenelement in der Trennwandstellung in einer Ebene mit einem Ladeboden des Kraftfahrzeuges liegt. Ein Ladebodenelement das flach, als Platte ausgebildet ist, und sich in der Normalstellung unter der Sitzfläche, üblicherweise in einer Sitzbankmulde und dadurch unter dem Niveau eines Ladebodens im hinteren Fahrzeugbereich befindet, kann so angehoben werden, dass es in der Trennwandstellung auf dem Niveau des Ladebodens zu liegen kommt. Hierdurch wird eine Vergrößerung des Ladebodens bewirkt bzw. ein durchgängig ebener Ladeboden, der bis zur Trennwand reicht.

Bevorzugt sind die Sitzfläche und die Lehne über einen Stellmotor in die Trennwandstellung verstellbar, insbesondere schwenkbar. Hierdurch ist keine manuelle Verstellung der Sitzbank erforderlich um die Trennwand auszubilden.

Besonders bevorzugt ist über den Stellmotor auch das Ladebodenelement anhebbar. Insbesondere erfolgt das Anheben des Ladebodenelementes über den Stellmotor zeitgleich, während auch die Sitzfläche und die Lehne, bevorzugt über den selben Stellmotor, in die Trennwandstellung verstellt, insbesondere geschwenkt werden. Hierdurch kann ohne Mühe gleichzeitig die Trennwand aufgerichtet und der Ladeboden verlängert werden. Das Ladebodenelement kann selbstverständlich auch über einen zweiten Stellmotor anhebbar sein, der vom Stellmotor für die Verstellung von Sitzfläche und Lehne verschieden ist.

Die Erfindung wird im Folgenden beispielhaft unter Bezugnahme auf die Zeichnungen beschrieben.
- Fig. 1: ist eine dreidimensionale Explosionsdarstellung der Lehne einer erfindungsgemäßen Sitzbank.
- Fig. 2: ist eine Vorderansicht der Lehne einer erfindungsgemäßen Sitzbank.
- Fig. 3: ist eine Seitenansicht der Lehne gem. Fig. 2 im Schnitt von B nach B.
- Fig. 4: ist eine Seitenansicht der Lehne gem. Fig. 2 im Schnitt von A nach A.
- Fig. 5: ist eine Detailansicht der Fig. 3.
- Fig. 6: ist eine Detailansicht der Fig. 4.
- Fig. 7: ist eine Vorderansicht der Lehne einer erfindungsgemäßen Sitzbank.
- Fig. 8: ist eine schematische Darstellung einer erfindungsgemäßen Sitzbank in einer Seitenansicht.
- Fig. 9a - 9c: sind schematische Darstellungen der Sitzbank gemäß Fig. 1, die einen Übergang von der Normalstellung in Fig. 2a zur Trennwandstellung in Fig. 2c zeigen.
- Fig. 10: ist eine schematische Darstellung die ein erfindungsgemäßes Kraftfahrzeug mit Sitzbank im Querschnitt zeigt.
- Fig. 11: ist eine schematische Ablaufdarstellung, die die Anhebung eines Ladebodenelementes in 3 Phasen zeigt.

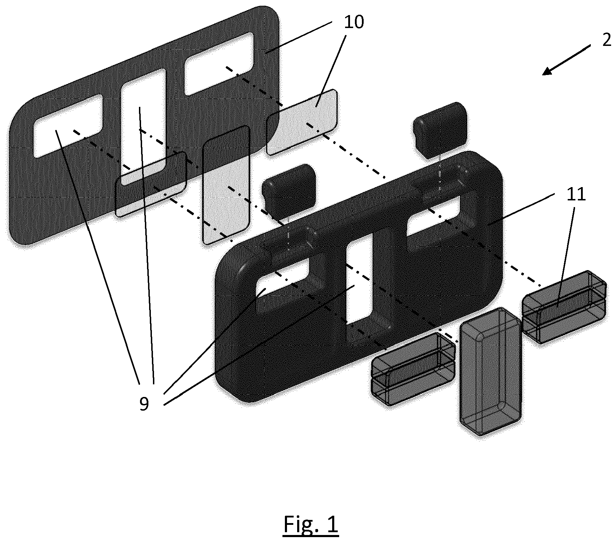

Fig. 1 zeigt die Lehne 2 einer erfindungsgemäßen Sitzbank in einer Explosionsdarstellung. Die Lehne 2 besteht aus einer Lehnenrückwand 10. Ein Bereich im Mittelteil und zwei seitliche Bereiche der Lehnenrückwand 10 sind als transparente Bereiche 9 ausgeführt. In diesen Bereichen wird die Lehnenrückwand 10 durch gesonderte transparente Platten gebildet, zum Beispiel durch transparenten Kunststoff. Die Polsterung 11 weist in den selben transparenten Bereichen 9 ebenfalls eine gesonderte Polsterung auf, die transparent ausgeführt ist.

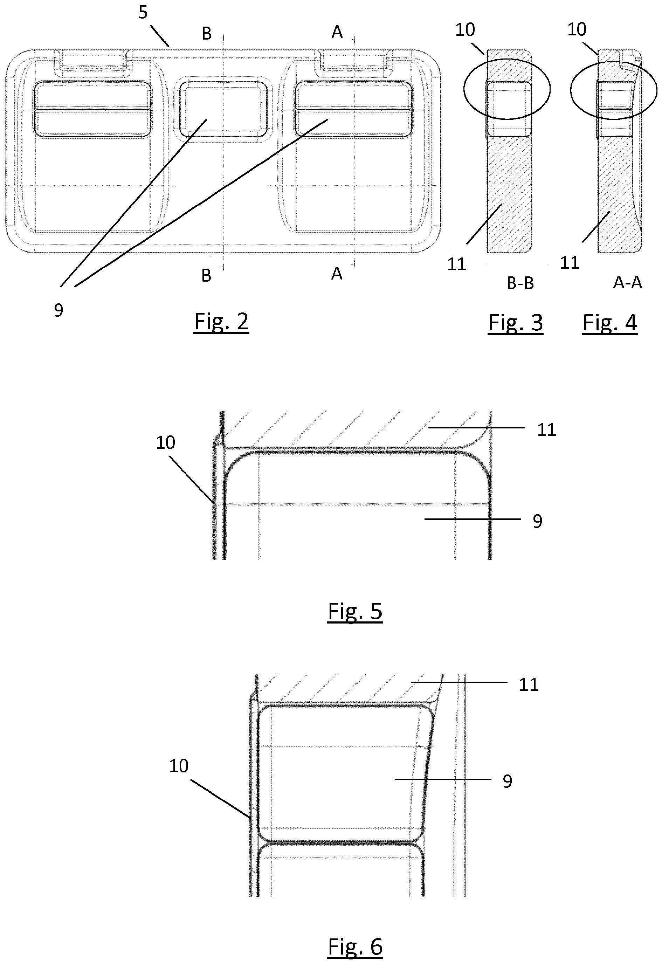

Fig. 2 ist eine Vorderansicht der Lehne 2 einer erfindungsgemäßen Sitzbank. Die Lehne 2 weist transparente Bereiche 9 auf.

Fig. 3 ist eine Seitenansicht der Lehne 2 gem. Fig. 2 im Schnitt von B nach B, also im mittleren Bereich der Lehne. Auch der transparente Bereich 9 weist eine Polsterung 11 auf. In der Detailansicht Fig. 5 ist dargestellt, dass die Lehnenrückwand 10, bedingt durch die Anordnung einer transparenten Platte als Lehnenrückwand 10, in diesem transparenten Bereich abgestuft in die übrige Lehnenrückwand 10 integriert ist.

Fig. 4 zeigt zusammen mit dessen Detailansicht Fig. 6 eine seitliche Ansicht der Lehne gem. Fig. 2 die in einem seitlichen Sitzbereich von A nach A geschnitten ist. Die Polsterung 11 wird hier im transparenten Bereich 9 durch zwei getrennte, luftgefüllte Polster erreicht.

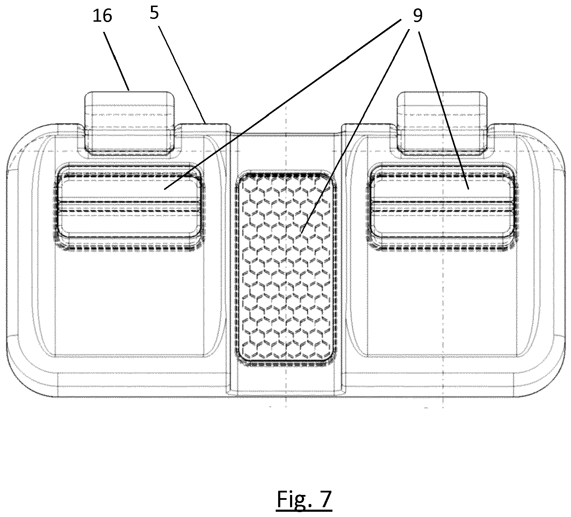

Fig. 7 ist eine Vorderansicht der Lehne einer weiteren erfindungsgemäßen Sitzbank. In diesem Ausführungsbeispiel ist der transparente Bereich 9 im Mittelteil der Lehne durch eine Lehnenrückwand mit einem Wabenkern verwirklicht. In dieser Ausführung reichen weiters Kopfstützen 16 über die Lehnenoberkante 5 hinaus. Im Gegensatz dazu ist es auch möglich, wie etwa in Fig. 2 dargestellt, Kopfstützenteile in die Lehne 2 zu integrieren, sodass eine möglichst durchgehende Lehnenoberkante 5 erreicht wird.

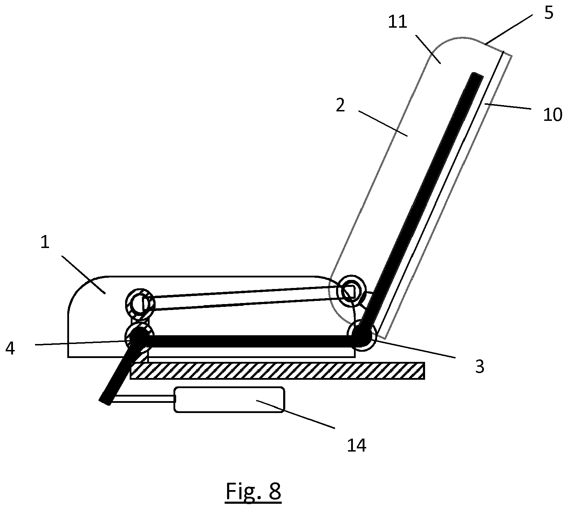

In Fig. 8 ist schematisch eine erfindungsgemäße Sitzbank in einer Seitenansicht gezeigt. Die Sitzbank umfasst eine Sitzfläche 1 und eine Lehne 2. Dabei ist die Lehne 2 relativ zur Sitzfläche 1 um die erste Schwenkachse 3 im hinteren Bereich der Sitzfläche 1 schwenkbar. Die Sitzfläche 1 selbst ist über die zweite Schwenkachse 4 am Fahrzeugrahmen schwenkbar gelagert. Lehne 2 und Sitzfläche 1 sind derart miteinander verbunden, dass eine Aktuierung über den Stellmotor 14 das Aufrichten der Lehne 2 und der Sitzfläche 1 in annähernd vertikale Position bewirkt. Dafür sind im Stand der Technik verschiedene Klappmechanismen bekannt, wie etwa die dargestellte Verwendung eines Betätigungsstabes oder auch die Verwendung eines Ketten- oder Zahnriemen-Systems.

Die Lehne 2 setzt sich aus einer Lehnenrückwand 10 und einer Polsterung 11 zusammen. Die Lehnenoberkante 5 befindet sich am oberen Ende der Lehne 2, das der ersten Schwenkachse 3 gegenüber liegt.

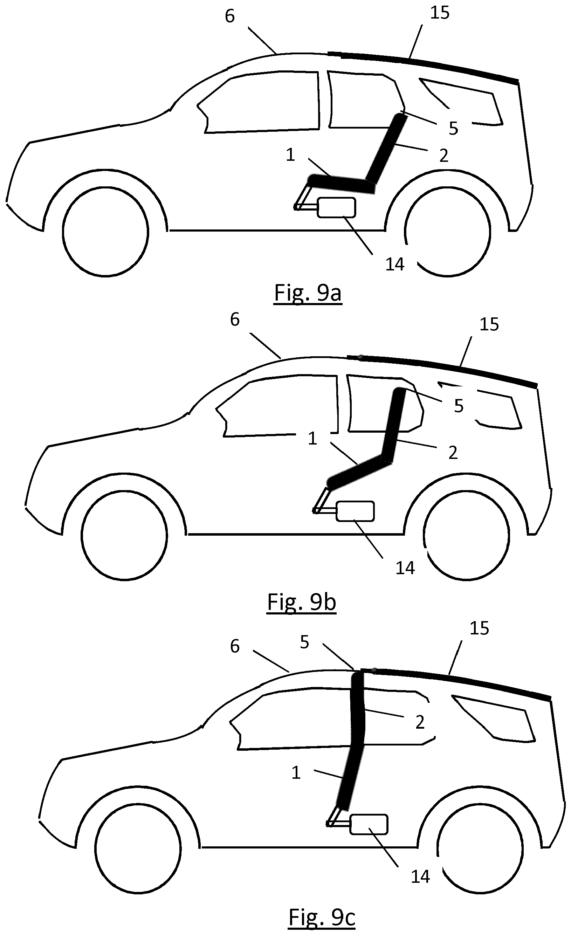

Fig. 9a - 9c sind schematische Darstellungen der erfindungsgemäßen Sitzbank in einem Kraftfahrzeug, die einen Übergang von der Normalstellung in Fig. 9a über eine Zwischenstellung wie in Fig. 9b dargestellt zur Trennwandstellung der Fig. 9c zeigen. In der Trennwandstellung, die in Fig. 9c dargestellt ist, verläuft die Trennwand aus Sitzfläche 1 und Lehne 2 bis zum Dach 6 des Fahrzeuges. In Fahrtrichtung hinter der Kontaktlinie zwischen Lehnenoberkante 5 und Dach 6 befindet sich ein abnehmbares Dachelement 15. In der dargestellten Ausführung ist der gesamte hintere Dachbereich bis zur Heckklappe des Fahrzeuges abnehmbar. In umgekehrter Richtung lässt sich die Trennwand mit Hilfe des Stellmotors 14 auch wieder aus der Trennwandstellung der Fig. 9c über die Zwischenstellung der Fig. 9b in die Normalstellung, also die Ausbildung der üblichen Sitzfläche 1 und Lehne 2 der Fig. 9a überführen.

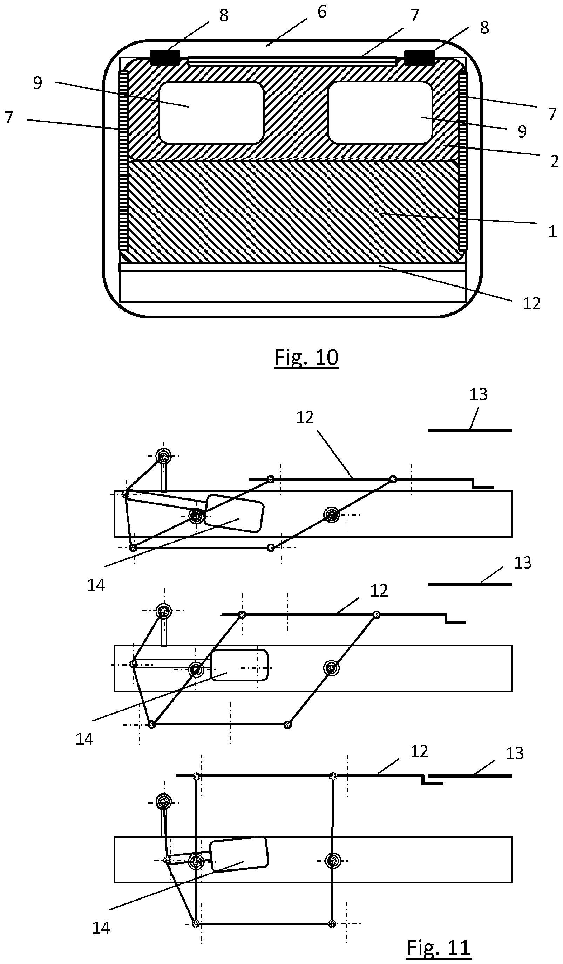

Fig. 10 ist eine schematische Darstellung, die ein erfindungsgemäßes Kraftfahrzeug mit Sitzbank im Querschnitt zeigt. Dabei wird durch die Sitzfläche 1 und die Lehne 2 im Wesentlichen der gesamte Querschnitt des Fahrzeuges abgedeckt. Im unteren Bereich befindet sich das nunmehr angehobene Ladebodenelement 12, das sich in der dargestellten Trennwandstellung in selber Höhe mit einem ohnehin vorhandenen Ladeboden befindet. In der Lehne 2 sind transparente Bereiche 9 dadurch ausgebildet, dass diese Bereiche keine Polsterung oder eine transparente Polsterung aufweisen und eine eventuell vorhandene Lehnenrückwand transparent ausgeführt ist. Die Lehne 2 ist mit Hilfe von Fixierelementen 8 am Dach 6 des Fahrzeuges fixiert. Weiters sind Dichtelemente 7 zwischen der Sitzfläche 1 bzw. der Lehne 2 und dem Rahmen des Kraftfahrzeuges, also dem Dach, den Seitenwänden und eventuell -nicht dargestellt- dem Ladebodenelement 12 angeordnet. Dadurch werden die Kontaktflächen zwischen der Trennwand und dem Fahrzeug abgedichtet.

Fig. 11 zeigt schließlich die Kinematik der Ladebodenanhebung in einer schematischen Ablaufdarstellung. In der obersten Darstellung der Fig. 11 befindet sich das Ladebodenelement 12 noch deutlich unter dem normalen Ladeboden 13, der hinter der Sitzbank den Boden eines Laderaumes bildet. Über den Stellmotor 14 und entsprechend am Fahrzeug gelagerte Gestänge erfolgt die Anhebung des Ladebodenelementes 12 auf die Höhe des Ladebodens 13, wie unten in Fig. 15 dargestellt.

Die Erfindung stellt somit ein Kraftfahrzeug mit einer Sitzbank dar, wobei sowohl ein bequemes Sitzen auf der Sitzbank als auch eine gute Sicht von einem vorderen in einen hinteren Bereich im Kraftfahrzeug ermöglicht wird.

### Bezugszeichenliste

- 1: Sitzfläche
- 2: Lehne
- 3: erste Schwenkachse
- 4: zweite Schwenkachse
- 5: Lehnenoberkante
- 6: Dach
- 7: Dichtelement
- 8: Fixierelement
- 9: transparenter Bereich
- 10: Lehnenrückwand
- 11: Polsterung
- 12: Ladebodenelement
- 13: Ladeboden
- 14: Stellmotor
- 15: Dachelement
- 16: Kopfstütze

## Patentansprüche

1. Kraftfahrzeug mit einer Sitzbank, die eine in einer Normalstellung annähernd horizontale Sitzfläche (1) und eine in der Normalstellung annähernd vertikale Lehne (2) umfasst,
wobei die Lehne (2) zumindest einen transparenten Bereich (9) umfasst, der so ausgebildet ist, dass die Sicht aus einem Bereich in Fahrtrichtung vor der Lehne (2) in einen Bereich in Fahrtrichtung hinter der Lehne (2) ermöglicht ist,
wobei die Lehne (2) eine Lehnenrückwand (10) umfasst und die Lehnenrückwand (10) in dem zumindest einen transparenten Bereich (9) aus transparentem Material, insbesondere aus Glas oder Kunststoff ausgebildet ist, **dadurch gekennzeichnet, dass** die Lehne (2) eine Polsterung (11) umfasst, wobei in dem zumindest einen transparenten Bereich (9) die Polsterung (11) entfernbar ist und/oder von einem transparenten Polster gebildet ist.

2. Kraftfahrzeug mit einer Sitzbank nach Anspruch 1,
**dadurch gekennzeichnet, dass** die Lehnenrückwand (10) in dem zumindest einen transparenten Bereich (9) einen transparenten Wabenkern umfasst.

3. Kraftfahrzeug mit einer Sitzbank nach Anspruch 1,
**dadurch gekennzeichnet, dass** in dem zumindest einen transparenten Bereich (9) die Polsterung (11) wegklappbar ist.

4. Kraftfahrzeug mit einer Sitzbank nach Anspruch 1,
**dadurch gekennzeichnet, dass** in dem zumindest einen transparenten Bereich (9) die Polsterung (11) von einem transparenten, luftgefüllten Polster gebildet ist.

5. Kraftfahrzeug mit einer Sitzbank nach Anspruch 1,
**dadurch gekennzeichnet, dass** die Lehne (2) so ausgebildet ist, dass die Lehne (2), zumindest in einer Trennwandstellung, eine Trennwand bildet, die den Bereich in Fahrtrichtung hinter der Lehne (2) vom Bereich in Fahrtrichtung vor der Lehne (2) abtrennt.

6. Kraftfahrzeug mit einer Sitzbank nach Anspruch 1,
**dadurch gekennzeichnet, dass** die Sitzfläche (1) und die Lehne (2) in eine Trennwandstellung verstellbar sind, in der die Sitzfläche (1) und die Lehne (2) eine zumindest annähernd vertikale Position einnehmen und die Lehne (2) oberhalb der Sitzfläche (1) angeordnet ist, so dass die Lehne (2) zusammen mit der Sitzfläche (1) eine Trennwand bildet, die den Bereich in Fahrtrichtung hinter der Trennwand vom Bereich in Fahrtrichtung vor der Trennwand abtrennt.

7. Kraftfahrzeug mit einer Sitzbank nach Anspruch 5 oder 6,
**dadurch gekennzeichnet, dass** in der Trennwandstellung die Lehnenoberkante (5) mit dem Dach (6) des Kraftfahrzeuges in Kontakt ist.

8. Kraftfahrzeug mit einer Sitzbank nach Anspruch 6,
**dadurch gekennzeichnet, dass** die Lehne (2) über eine erste Schwenkachse (3) im hinteren Bereich der Sitzfläche (1) an der Sitzfläche (1) schwenkbar gelagert ist und die Sitzfläche (1) über eine zweite Schwenkachse (4) im vorderen Bereich der Sitzfläche (1) am Fahrzeugrahmen schwenkbar gelagert ist und dass die Sitzfläche (1) und die Lehne (2) um die erste und zweite Schwenkachse (3, 4) in die Trennwandstellung schwenkbar sind.

9. Kraftfahrzeug mit einer Sitzbank nach Anspruch 5 oder 6,
**dadurch gekennzeichnet, dass** sich die Lehnenoberkante (5) über die gesamte Breite des Daches (6) des Kraftfahrzeuges erstreckt und die Lehnenoberkante (5) in der Trennwandstellung über die gesamte Breite mit dem Dach (6) des Kraftfahrzeuges in Kontakt ist.

10. Kraftfahrzeug mit einer Sitzbank nach Anspruch 5 oder 6,
**dadurch gekennzeichnet, dass** die Sitzfläche (1) und die Lehne (2) so ausgebildet sind, dass in der Trennwandstellung die Trennwand den gesamten Querschnitt des Kraftfahrzeuges überdeckt.

11. Kraftfahrzeug mit einer Sitzbank nach Anspruch 5 oder 6,
**dadurch gekennzeichnet, dass** im Innenraum des Kraftfahrzeuges zumindest ein Dichtelement (7) angeordnet ist, das in der Trennwandstellung einen Kontaktbereich zwischen der Trennwand und dem Kraftfahrzeug abdichtet.

12. Kraftfahrzeug mit einer Sitzbank nach Anspruch 5 oder 6,
**dadurch gekennzeichnet, dass** in der Trennwandstellung die Trennwand den Bereich in Fahrtrichtung hinter der Trennwand vom Bereich in Fahrtrichtung vor der Trennwand annähernd schalldicht, wasserdicht und/oder luftdicht abtrennt.

13. Kraftfahrzeug mit einer Sitzbank nach Anspruch 6,
**dadurch gekennzeichnet, dass** im Innenraum des Kraftfahrzeuges zumindest ein Fixierelement (8) angeordnet ist, das dazu eingerichtet ist, in der Trennwandstellung die Lehne (2) und/oder die Sitzfläche (1) in der zumindest annähernd vertikalen Position am Kraftfahrzeug zu fixieren.

14. Kraftfahrzeug mit einer Sitzbank nach Anspruch 5 oder 6,
**dadurch gekennzeichnet, dass** das Dach (6) des Kraftfahrzeuges ein abnehmbares oder verschiebbares oder faltbares Dachelement (15) umfasst, das in der Trennwandstellung in Fahrtrichtung hinter der Trennwand liegt.

15. Kraftfahrzeug mit einer Sitzbank nach Anspruch 6,
**dadurch gekennzeichnet, dass** ein flaches Ladebodenelement (12), das sich in der Normalstellung der Sitzbank im Wesentlichen unter der Sitzfläche (1) befindet, in der Trennwandstellung der Sitzbank angehoben ist, so dass das Ladebodenelement (12) in der Trennwandstellung in einer Ebene mit einem Ladeboden (13) des Kraftfahrzeuges liegt.

16. Kraftfahrzeug mit einer Sitzbank nach Anspruch 6,
**dadurch gekennzeichnet, dass** die Sitzfläche (1) und die Lehne (2) über einen Stellmotor (14) in die Trennwandstellung verstellbar sind.

17. Kraftfahrzeug mit einer Sitzbank nach Anspruch 15 und Anspruch 16,
**dadurch gekennzeichnet, dass** über den Stellmotor (14) das Ladebodenelement (12) anhebbar ist, insbesondere zeitgleich während die Sitzfläche (1) und die Lehne (2) in die Trennwandstellung verstellbar sind.

## Claims

1. Motor vehicle with a seating bench which comprises a seat surface (1) which is approximately horizontal in a normal position and a backrest (2) which is approximately vertical in the normal position,
wherein the backrest (2) comprises at least one transparent region (9) which is designed in such a manner that the view from a region in front of the backrest (2) in the direction of travel into a region behind the backrest (2) in the direction of travel is made possible,
wherein the backrest (2) comprises a backrest rear wall (10), and the backrest rear wall (10) is formed from transparent material, in particular from glass or plastic, in the at least one transparent region (9), **characterized in that** the backrest (2) comprises upholstery (11), wherein the upholstery (11) can be removed, and/or is formed from a transparent upholstery, in the at least one transparent region (9),

2. Motor vehicle with a seating bench according to Claim 1,
**characterized in that** the backrest rear wall (10) comprises a transparent honeycomb core in the at least one transparent region (9).

3. Motor vehicle with a seating bench according to Claim 1,
**characterized in that** the upholstery (11) can be folded away in the at least one transparent region (9) .

4. Motor vehicle with a seating bench according to Claim 1,
**characterized in that** the upholstery (11) is formed by a transparent, air-filled cushion, in the at least one transparent region (9).

5. Motor vehicle with a seating bench according to Claim 1,
**characterized in that** the backrest (2) is designed in such a manner that the backrest (2), at least in a partition position, forms a partition which separates the region behind the backrest (2) in the direction of travel from the region in front of the backrest (2) in the direction of travel.

6. Motor vehicle with a seating bench according to Claim 1,
**characterized in that** the seat surface (1) and the backrest (2) are adjustable into a partition position in which the seat surface (1) and the backrest (2) adopt an at least approximately vertical position and the backrest (2) is arranged above the seat surface (1) such that the backrest (2) together with the seat surface (1) forms a partition which separates the region behind the partition in the direction of travel from the region in front of the partition in the direction of travel.

7. Motor vehicle with a seating bench according to Claim 5 or 6,
**characterized in that** the backrest upper edge (5) is in contact with the roof (6) of the motor vehicle in the partition position.

8. Motor vehicle with a seating bench according to Claim 6,
**characterized in that** the backrest (2) is mounted pivotably on the seat surface (1) via a first pivot axis (3) in the rear region of the seat surface (1) and the seat surface (1) is mounted pivotably on the vehicle frame via a second pivot axis (4) in the front region of the seat surface (1), and **in that** the seat surface (1) and the backrest (2) are pivotable about the first and second pivot axes (3, 4) into the partition position.

9. Motor vehicle with a seating bench according to Claim 5 or 6,
**characterized in that** the backrest upper edge (5) extends over the entire width of the roof (6) of the motor vehicle, and the backrest upper edge (5) is in contact over the entire width with the roof (6) of the motor vehicle in the partition position.

10. Motor vehicle with a seating bench according to Claim 5 or 6,
**characterized in that** the seat surface (1) and the backrest (2) are designed in such a manner that the partition covers the entire cross section of the motor vehicle in the partition position.

11. Motor vehicle with a seating bench according to Claim 5 or 6,
**characterized in that** at least one sealing element (7) is arranged in the interior space of the motor vehicle, said sealing element sealing a contact region between the partition and the motor vehicle in the partition position.

12. Motor vehicle with a seating bench according to Claim 5 or 6,
**characterized in that** the partition separates the region behind the partition in the direction of travel from the region in front of the partition in the direction of travel in an approximately soundproof, watertight and/or airtight manner in the partition position.

13. Motor vehicle with a seating bench according to Claim 6,
**characterized in that** at least one fixing element (8) is arranged in the interior space of the motor vehicle, said fixing element being designed to fix the backrest (2) and/or the seat surface (1) in the at least approximately vertical position to the motor vehicle in the partition position.

14. Motor vehicle with a seating bench according to Claim 5 or 6,
**characterized in that** the roof (6) of the motor vehicle comprises a removable or displaceable or foldable roof element (15) which lies behind the partition in the direction of travel in the partition position.

15. Motor vehicle with a seating bench according to Claim 6,
**characterized in that** a flat loading floor element (12) which, in the normal position of the seating bench, is substantially located under the seat surface (1) is raised in the partition position of the seating bench such that the loading floor element (12) lies in one plane with a loading floor (13) of the motor vehicle in the partition position.

16. Motor vehicle with a seating bench according to Claim 6,
**characterized in that** the seat surface (1) and the backrest (2) are adjustable into the partition position via a servomotor (14).

17. Motor vehicle with a seating bench according to Claim 15 and Claim 16,
**characterized in that** the loading floor element (12) is raisable via the servomotor (14), in particular at the same time as the seat surface (1) and the backrest (2) are adjustable into the partition position.

## Revendications

1. Véhicule automobile doté d'un banc, qui comprend une surface de siège (1) approximativement horizontale dans une position normale et un dossier (2) approximativement vertical dans la position normale,
le dossier (2) comprenant au moins une région transparente (9) qui est réalisée de telle sorte que l'on puisse voir depuis une région dans la direction de conduite devant le dossier (2) dans une région dans la direction de conduite derrière le dossier (2),
le dossier (2) comprenant une paroi arrière de dossier (10) et la paroi arrière de dossier (10), dans l'au moins une région transparente (9) étant réalisée en matériau transparent, en particulier en verre ou en matière plastique, **caractérisé en ce que** le dossier (2) comprend un rembourrage (11), le rembourrage (11) pouvant être enlevé dans l'au moins une région transparente (9) et/ou étant formé par un coussin transparent.

2. Véhicule automobile doté d'un banc selon la revendication 1,
**caractérisé en ce que** la paroi arrière de dossier (10), dans l'au moins une région transparente (9), comprend un noyau en nid d'abeilles transparent.

3. Véhicule automobile doté d'un banc selon la revendication 1,
**caractérisé en ce que** dans l'au moins une région transparente (9), le rembourrage (11) peut être enlevé par rabattement.

4. Véhicule automobile doté d'un banc selon la revendication 1,
**caractérisé en ce que** dans l'au moins une région transparente (9), le rembourrage (11) est formé par un coussin transparent rempli d'air.

5. Véhicule automobile doté d'un banc selon la revendication 1,
**caractérisé en ce que** le dossier (2) est réalisé de telle sorte que le dossier (2), au moins dans une position de paroi de séparation, forme une paroi de séparation qui sépare la région dans la direction de conduite derrière le dossier (2) de la région dans la direction de conduite devant le dossier (2).

6. Véhicule automobile doté d'un banc selon la revendication 1,
**caractérisé en ce que** la surface de siège (1) et le dossier (2) sont déplaçables dans une position de paroi de séparation, dans laquelle la surface de siège (1) et le dossier (2) adoptent une position au moins approximativement verticale et le dossier (2) est disposé au-dessus de la surface de siège (1) de telle sorte que le dossier (2), conjointement avec la surface de siège (1) forme une paroi de séparation qui sépare la région dans la direction de conduite derrière la paroi de séparation de la région dans la direction de conduite devant la paroi de séparation.

7. Véhicule automobile doté d'un banc selon la revendication 5 ou 6,
**caractérisé en ce que** dans la position de paroi de séparation, l'arête supérieure du dossier (5) est en contact avec le toit (6) du véhicule automobile.

8. Véhicule automobile doté d'un banc selon la revendication 6,
**caractérisé en ce que** le dossier (2) est supporté de manière pivotante sur la surface de siège (1) par le biais d'un premier axe de pivotement (3) dans la région arrière de la surface de siège (1), et la surface de siège (1) est supportée de manière pivotante sur le châssis du véhicule par le biais d'un deuxième axe de pivotement (4) dans la région avant de la surface de siège (1) et **en ce que** la surface de siège (1) et le dossier (2) peuvent pivoter autour du premier et du deuxième axe de pivotement (3, 4) dans la position de paroi de séparation.

9. Véhicule automobile doté d'un banc selon la revendication 5 ou 6,
**caractérisé en ce que** l'arête supérieure du dossier (5) s'étend sur toute la largeur du toit (6) du véhicule automobile et l'arête supérieure du dossier (5) est en contact dans la position de paroi de séparation sur toute la largeur avec le toit (6) du véhicule automobile.

10. Véhicule automobile doté d'un banc selon la revendication 5 ou 6,
**caractérisé en ce que** la surface de siège (1) et le dossier (2) sont réalisés de telle sorte que dans la position de paroi de séparation, la paroi de séparation recouvre toute la section transversale du véhicule automobile.

11. Véhicule automobile doté d'un banc selon la revendication 5 ou 6,
**caractérisé en ce que** dans l'espace interne du véhicule automobile est disposé au moins un élément d'étanchéité (7) qui, dans la position de paroi de séparation, étanchéifie une région de contact entre la paroi de séparation et le véhicule automobile.

12. Véhicule automobile doté d'un banc selon la revendication 5 ou 6,
**caractérisé en ce que** dans la position de paroi de séparation, la paroi de séparation sépare la région dans la direction de conduite derrière la paroi de séparation de la région dans la direction de conduite devant la paroi de séparation approximativement de manière insonorisée, étanche à l'eau et/ou étanche à l'air.

13. Véhicule automobile doté d'un banc selon la revendication 6,
**caractérisé en ce qu'**au moins un élément de fixation (8) est disposé dans l'espace interne du véhicule automobile, lequel est prévu pour fixer sur le véhicule automobile, dans la position de paroi de séparation, le dossier (2) et/ou la surface de siège (1) dans la position au moins approximativement verticale.

14. Véhicule automobile doté d'un banc selon la revendication 5 ou 6,
**caractérisé en ce que** le toit (6) du véhicule automobile comprend un élément de toit (15) amovible ou déplaçable ou repliable, qui est situé, dans la position de paroi de séparation, dans la direction de conduite derrière la paroi de séparation.

15. Véhicule automobile doté d'un banc selon la revendication 6,
**caractérisé en ce qu'**un élément de fond de chargement plat (12), qui se trouve dans la position normale du banc, essentiellement sous la surface de siège (1), est soulevé dans la position de paroi de séparation du banc, de telle sorte que l'élément de fond de chargement (12) soit situé dans la position de paroi de séparation dans un plan avec un fond de chargement (13) du véhicule automobile.

16. Véhicule automobile doté d'un banc selon la revendication 6,
**caractérisé en ce que** la surface de siège (1) et le dossier (2) peuvent être déplacés par le biais d'un moteur de commande (14) dans la position de paroi de séparation.

17. Véhicule automobile doté d'un banc selon la revendication 15 et la revendication 16,
**caractérisé en ce que** l'élément de fond de chargement (12) peut être soulevé par le biais du moteur de commande (14), en particulier en même temps que la surface de siège (1) et le dossier (2) peuvent être déplacés dans la position de paroi de séparation.
